# EUROPÄISCHE PATENTSCHRIFT

(11) **EP 1 072 806 B1**
(45) Veröffentlichungstag und Bekanntmachung des Hinweises auf die Patenterteilung: **29.09.2004**
(21) Anmeldenummer: 00115954.0
(22) Anmeldetag: 26.07.2000
(51) Int. Cl.: F16C 35/00, F16C 35/067, F16C 35/04

(54) **Verfahren zur Befestigung eines Lagers in einem Lagerschild und Lageranordnung**
Method of securing a bearing in a bearing shield and a bearing arrangement
Procédé de fixation d'un palier dans un flasque bouclier et dispositif de palier

(30) Priorität: 28.07.1999 DE 19935469
(43) Veröffentlichungstag der Anmeldung: 31.01.2001
(73) Patentinhaber: SKF GmbH, 97421 Schweinfurt (DE)
(72) Erfinder: Horling, Peter, 97453 Mainberg (DE); Beyfuss, Berthold, 97535 Kaisten (DE); Buchheim, Burkhard, 97422 Schweinfurt (DE); Hauck, Helmut, 97502 Euerbach (DE); Brandenstein, Manfred, 97776 Eussenheim (DE)
(74) Vertreter: Gosdin, Michael, Dr.

(56) Entgegenhaltungen:
- EP-A- 0 029 395
- EP-A- 0 485 001
- EP-A- 0 891 031
- DE-U- 29 809 031
- FR-A- 2 592 108
- US-A- 3 692 372
- US-A- 5 564 838

## Beschreibung

Die Erfindung betrifft ein Verfahren zur Befestigung mindestens eines Lagers in einem Lagerschild, das eine Vertiefung zur Aufnahme des Lagers aufweist, bei dem das festzulegende Lager in der Vertiefung des Lagerschildes positioniert wird. Des weiteren betrifft die Erfindung eine Lageranordnung, bestehend aus einem Lagerschild mit mindestens einer Vertiefung, in der ein Lager angeordnet ist.

Das gattungsgemäße Verfahren bzw. die genannte Lageranordnung ist bereits aus der DE 29809031 U bekannt. Dort ist beschrieben, Lager in eine Lageraufnahme einzubringen, wobei diese durch Tiefziehen eines Grundblechs erzeugt wird. Durch derartige Vertiefungen wird eine gute radiale Festlegung des Lagers erreicht.

Wenn beispielsweise zwei parallel verlaufende Wellen in einem Getriebe einen recht geringen Abstand voneinander aufweisen müssen, kann es notwendig sein, die jeweiligen Wellenlagerungen soweit aneinander anzunähern, daß sich im Lagerschild, das die Lager trägt, die Kontur einer Acht ausbildet, weil nicht mehr genügend Raum zur Verfügung steht, um die Außenringe der jeweiligen Lager völlig zu umfassen.

Bei der vorbekannten Lageranordnung werden daher die beiden recht nahe zueinander anzuordnenden Lager in die tiefgezogenen Sitzflächen im Lagerschild eingesetzt; um die Lager dann im Lagerschild axial zu fixieren, ist dort vorgesehen, daß das Lagerschild im Rahmen eines Verstemmvorgangs plastisch verformt wird, so daß eine axiale Bewegung der Lager ausgeschlossen ist. Bei besonders hohen Belastungen im Betrieb kann es jedoch sein, daß sich die Lageraußenringe in ihren Sitzflächen im Lagerschild wieder lösen. Dies ist bedingt durch die während des Betriebs auftretende Walkarbeit, die von den Wellen ausgehend sich auch auf die Lager ausdehnt und dort allmählich zu einem Lösen der axialen Fixierung der Lageraußenringe führt.

Grundsätzlich sind auch andere Möglichkeiten denkbar, um eine axiale Festlegung der Lager in einem Lagerschild zu erreichen. Dies kann beispielsweise durch Schweißen oder Löten erfolgen. Dabei wurde in Versuchen jedoch festgestellt, daß eine schwierige Gratwanderung zu bewältigen ist, die einerseits der geforderten Haltbarkeit und Präzision der Lagerfestlegung und andererseits der Wirtschaftlichkeit des Verfahrens genügt.

Der Erfindung liegt daher die **Aufgabe** zugrunde, ein Verfahren bzw. eine Lageranordnung der eingangs genannten Art derart weiterzubilden, daß es mit relativ geringem Aufwand - und damit kostengünstig - möglich wird, eine zuverlässige axiale Festlegung der Lager in einem Lagerschild zu erreichen.

Die **Lösung** dieser Aufgabe durch die Erfindung ist dadurch gekennzeichnet, daß das Verfahren die Schritte aufweist:
a) Anprägen mindestens einer Positionierungsfläche 5 am Lagerschild 2 für die genaue Positionierung eines Halteblechs 6;
b) Positionieren eines Halteblechs 6 durch Anlegen des Halteblechs 6 an die mindestens eine geprägte Positionierungsfläche 5, wobei das Halteblech 6 so positioniert wird, daß es im späteren Betrieb des Lagers 1 eine axiale Kraft auf einen Teil des Lagers 1 ausübt;
c) Stoffschlüssiges Verbinden des Halteblechs 6 mit dem Lagerschild 2;

Wie bei der versuchsweisen Prüfung des vorgeschlagenen Verfahrens festgestellt wurde, läßt sich hiermit ein sehr guter Kompromiß zwischen Fertigungskosten auf der einen Seite und Präzision und Haltbarkeit der Lageranordnung auf der anderen Seite erzielen. Durch einen Prägevorgang, der vorzugsweise zusammen mit dem Tiefziehen der Vertiefungen des Lagerschilds erfolgt, wird eine definierte Anlagefläche für ein Halteblech erzeugt, so daß eine hohe Präzision für die Festlegung des Lagers erreichbar ist. Ein Halteblech kann aufgrund der angeprägten Positionierungsfläche in sehr einfacher Weise angelegt und gehalten werden, während es durch stoffschlüssiges Verbinden mit dem Lagerschild fixiert wird. Dabei wird bevorzugt die Positionierung des Halteblechs 6 zwecks Ausübung einer axialen Kraft auf einen Teil des Lagers 1 im späteren Betrieb des Lagers 1 so erfolgen, daß das Halteblech 6 mit einer vorgegebenen Kraft F während der Fixierung des Halteblechs 6 am Lagerschild 2 in Achsrichtung 14 des Lagers 1 beaufschlagt wird. Das Halteblech wird insofern vorgespannt fixiert, weshalb eine extrem hohe Haltbarkeit und hervorragende Festlegung des Lagers im Lagerschild erzielt werden kann.

Vorzugsweise ist vorgesehen, daß das Lager 1 vor Ausführung der obigen Verfahrensschritte b) und c) relativ zum Lagerschild 2 ferner durch plastische Verformung, vorzugsweise durch Verstemmen eines Teilbereichs 4 des Lagerschilds 2, axial fixiert wird. Durch diese Vorgehensweise kann die axiale Festlegung des Lagers weiter verbessert werden.

Vorzugsweise ist daran gedacht, daß die stoffschlüssige Verbindung nach obigem Verfahrensschritt c) durch Schweißen erfolgt; hierbei ist insbesondere an ein Laserschweißverfahren oder an ein Elektronenstrahlschweißverfahren gedacht.

Alternativ dazu kann aber auch vorgesehen werden, daß die stoffschlüssige Verbindung indirekt über ein in einen Spalt zwischen dem Lagerschild 2 und dem Halteblech 6 eingebrachtes zusätzliches Material hergestellt wird; die stoffschlüssige Verbindung kann insofern bevorzugt durch Löten oder Kleben hergestellt werden.

Die erfindungsgemäße Lageranordnung ist dadurch gekennzeichnet, daß
das Lagerschild 2 mindestens eine angeprägte Positionierungsfläche 5 für die genaue Positionierung eines Halteblechs 6 sowie ein an der Positionierungsfläche 5 angelegtes Halteblech aufweist, wobei das Halteblech 6 mit dem Lagerschild 2 stoffschlüssig verbunden ist und wobei das Halteblech 6 so positioniert ist, daß es im späteren Betrieb des Lagers 1 eine axiale Kraft auf einen Teil des Lagers 1 ausübt.

Das Lager 1 ist dabei weiterbildungsgemäß durch plastische Verformung, vorzugsweise durch Verstemmen, eines Teilbereichs 4 des Lagerschilds 2 in axialer Richtung formschlüssig mit dem Lagerschild 2 verbunden. Die stoffschlüssige Verbindung zwischen Halteblech 6 und Lagerschild 2 ist bevorzugt durch Verschweißen hergestellt, insbesondere durch Laserverschweißung oder Elektronenstrahlverschweißung; alternativ dazu kann das Halteblech 6 mit dem Lagerschild 2 auch verlötet oder verklebt sein.

Bevorzugt ist das Halteblech 6 so am Lagerschild angeformt, daß es mit seiner Unterseite 7 auf einen Teil des Seitenbereichs 8 des Außenrings 9 des Lagers 1 drückt.

In der Zeichnung ist ein Ausführungsbeispiel der Erfindung dargestellt.
- Figur 1: zeigt die Draufsicht auf ein Lagerschild, das zwei Lager trägt, in
- Figur 2: ist ein Ausschnitt des Schnittes A-A aus Figur 1 zu sehen.

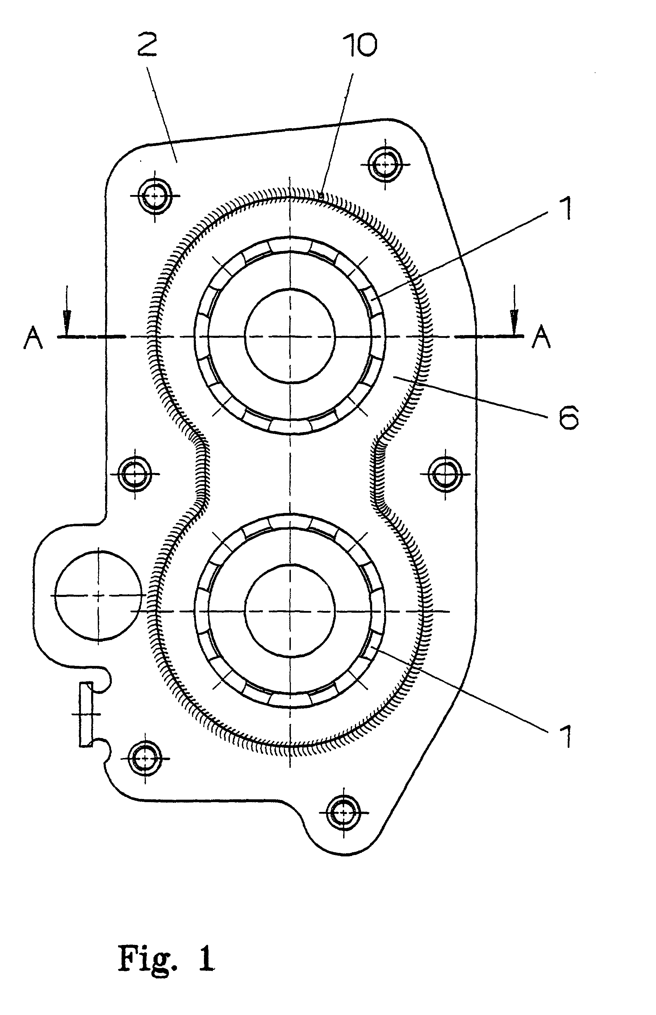

In Figur 1 ist ein Lagerschild 2 zu sehen, in dem zwei Wälzlager 1 angeordnet sind. Die beiden Lager 1 müssen zueinander einen recht geringen Abstand haben, so daß die Aufnahme der Lager 1 im Lagerschild 2 die Form einer Acht aufweist. Zur axialen Festlegung der Lager 1 ist ein Halteblech 6 auf die Oberseite des Lagerschilds 2 aufgeschweißt, das ebenfalls die Kontur einer Acht bzw. einer "Brille" aufweist.

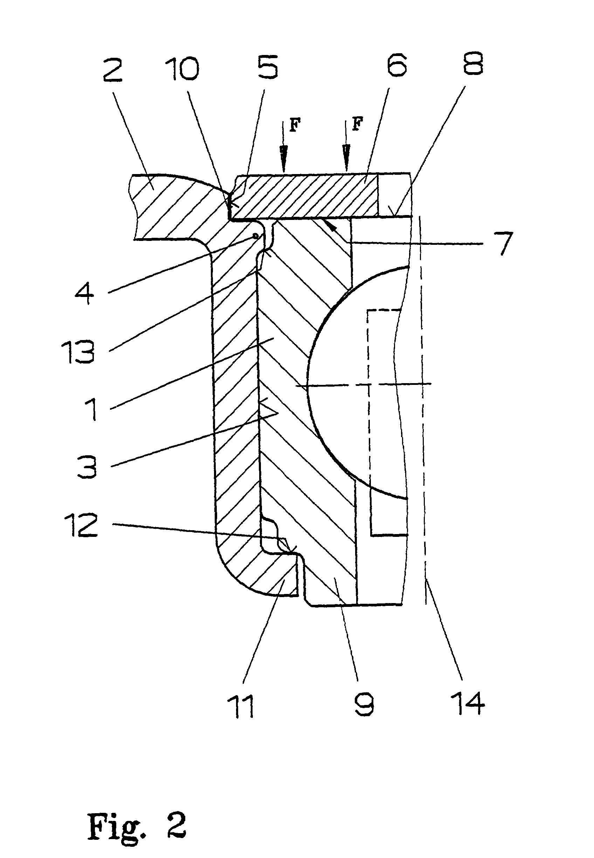

Details hierzu gehen aus Figur 2 hervor. Das Lagerschild 2 hat zur Aufnahme des Außenringes 9 des Lagers 1 eine Vertiefung 3. Diese kann beispielsweise durch einen Tiefziehvorgang in wirtschaftlicher Weise hergestellt werden. Damit der Außenring 9 "nach unten" axial fixiert ist, weist das Lagerschild 2 einen axialen Endanschlag 11 auf, gegen den die untere Lagerschulter 12 des Außenrings 9 drückt.

Zur axialen Festlegung des Außenrings 9 im "oberen" Bereich ist zunächst vorgesehen, daß ein Teilbereich 4 des Lagerschilds 2 plastisch verformt wurde. Wie in der Figur gut zu erkennen ist, wurde der Bereich 4 derart verstemmt, d.h. plastisch verformt, daß er auf die obere Lagerschulter 13 drückt und so für eine axiale Festlegung des Lagers sorgt.

Für besonders hohe Belastungen ist es jedoch oft nicht ausreichend, sich mit der plastischen Verformung 4 zur axialen Festlegung des Lagers zu begnügen. Erfindungsgemäß ist vielmehr vorgesehen, daß an das Lagerschild 2 eine Positionierfläche 5 angeprägt wurde, was beispielsweise gleichzeitig mit dem Schaffen der Vertiefung 3 durch Tiefziehen erfolgen kann, aber auch alternativ dazu im Rahmen des plastischen Verformvorgangs (Verstemmvorgangs) für den Teilbereich 4.

Die Positionierfläche 5 wird so angeformt (beispielsweise mit einer Toleranz von wenigen Zehntel Millimetern), daß ein Halteblech 6, das eine entsprechende Genauigkeit in seiner Form aufweist, eingelegt werden kann. Zu diesem Zwecke weist die Positionierungsfläche 5 nicht nur einen Anschlag in radialer Richtung des Lagers, sondern gleichermaßen einen axialen Anschlag auf Die axiale Definition des Positionierungsfläche 5 ist so vorgesehen, daß das Halteblech 6 bei Anlage an der Positionierungsfläche 5 eine axiale Kraft auf den Lagerring 9 ausübt. Zu diesem Zweck ist der axiale Anschlag der Positionierungsfläche 5 im Vergleich mit dem Seitenbereich 8 des Außenrings 9 des Lagers 1 etwas rückversetzt, beispielsweise um einige hundertstel Millimeter.

Zu beachten ist dabei, daß radial für das sich anschließende Verschweißen ein Schweiß-Spalt in üblicher Größe - abhängig vom Schweißverfahren - gelassen wird.

Nach Positionierung des Halteblechs 6 in die Positionierungsfläche 5 wird das Halteblech 6 am Lagerschild 2 verschweißt, wobei sich die Schweißnaht 10 bildet. Während des Verschweißvorgangs wird das Halteblech 6 "von oben", nämlich in Richtung der Kraft F beaufschlagt, so daß nach Herstellung der Schweißnaht 10 das Halteblech 6 mit seiner Unterseite 7 auf den Seitenbereich 8 des Außenrings 9 des Lagers 1 drückt und so für eine solide Vorspannung bzw. Halterung des Lagers im Lagerschild sorgt. Damit wird erreicht, daß auch bei langer Einsatzdauer das Lager im Lagerschild einwandfrei festliegt.

Das erfindungsgemäße Verfahren bzw. die erfindungsgemäße Lageranordnung stellt eine verbesserte alternative Möglichkeit zu vorbekannten Verfahren und Ausfiihrungsformen dar, mit der in wirtschaftlicher Weise eine Festlegung eines Lagers in einem Lagerschild erreicht werden kann, die auch bei langem Einsatz der Lagerung eine zuverlässige Fixierung des Lagers relativ zum Lagerschild sicherstellt.

### Bezugszeichenliste

- 1: Lager
- 2: Lagerschild
- 3: Vertiefung
- 4: plastisch verformter Teilbereich des Lagerschildes
- 5: Positionierungsfläche
- 6: Halteblech
- 7: Unterseite des Halteblechs 6
- 8: Seitenbereich des Außenringes 9 des Lagers 1
- 9: Außenring des Lagers
- 10: Schweißnaht
- 11: Axialer Endanschlag
- 12: untere Lagerschulter
- 13: obere Lagerschulter
- 14: Achsrichtung

- F: Kraft zur Beaufschlagung des Halteblechs 6

## Patentansprüche

1. Verfahren zur Befestigung mindestens eines Lagers (1) in einem Lagerschild (2), das eine Vertiefung (3) zur Aufnahme des Lagers (1) aufweist, bei dem das festzulegende Lager (1) in der Vertiefung (3) des Lagerschildes (2) positioniert wird,
**dadurch gekennzeichnet, daß**
das Verfahren die Schritte aufweist:
a) Anprägen mindestens einer Positionierungsfläche (5) am Lagerschild (2) für die Positionierung eines Haltebleches (6);
b) Positionieren eines Haltebleches (6) durch Anlegen des Haltebleches (6) an die mindestens eine geprägte Positionierungsfläche (5), wobei das Halteblech (6) so positioniert wird, daß es im späteren Betrieb des Lagers (1) eine axiale Kraft auf einen Teil des Lagers (1) ausübt;
c) Stoffschlüssiges Verbinden des Haltebleches (6) mit dem Lagerschild (2);

2. Verfahren nach Anspruch 1, **dadurch gekennzeichnet, daß** das Lager (1) vor Ausführung der Verfahrensschritte b) und c) gemäß Anspruch 1 relativ zum Lagerschild (2) durch plastische Verformung, vorzugsweise durch Verstemmen, eines Teilbereichs (4) des Lagerschildes (2), axial fixiert wird.

3. Verfahren nach Anspruch 1 oder 2, **dadurch gekennzeichnet, daß** das stoffschlüssige Verbinden nach Schritt c) gemäß Anspruch 1 durch Schweißen erfolgt.

4. Verfahren nach Anspruch 3, **dadurch gekennzeichnet, daß** das Schweißverfahren ein Laserschweißverfahren ist.

5. Verfahren nach Anspruch 3, **dadurch gekennzeichnet, daß** das Schweißverfahren ein Elektronenstrahlschweißverfahren ist.

6. Verfahren nach Anspruch 1 oder 2, **dadurch gekennzeichnet, daß** die stoffschlüssige Verbindung nach Schritt c) gemäß Anspruch 1 indirekt über ein in einen Spalt zwischen dem Lagerschild (2) und dem Halteblech (6) eingebrachtes zusätzliches Material hergestellt wird.

7. Verfahren nach Anspruch 6, **dadurch gekennzeichnet, daß** die stoffschlüssige Verbindung durch Löten oder Kleben hergestellt wird.

8. Verfahren nach einem der Ansprüche 1 bis 7, **dadurch gekennzeichnet, daß** die Positionierung des Halteblechs (6) zwecks Ausübung einer axialen Kraft auf einen Teil des Lagers (1) im späteren Betrieb des Lagers (1) so erfolgt, daß das Halteblech (6) mit einer vorgegebenen Kraft (F) während der Fixierung des Halteblechs (6) am Lagerschild (2) in Achsrichtung (14) des Lagers (1) beaufschlagt wird.

9. Lageranordnung, bestehend aus einem Lagerschild (2) mit mindestens einer Vertiefung (3), in der ein Lager (1) angeordnet ist,
**dadurch gekennzeichnet, daß**
das Lagerschild (2) mindestens eine angeprägte Positionierungsfläche (5) für die genaue Positionierung eines Haltebleches (6) sowie ein an der Positionierungsfläche (5) angelegtes Halteblech aufweist, wobei das Halteblech (6) mit dem Lagerschild (2) stoffschlüssig verbunden ist und wobei das Halteblech (6) so positioniert ist, daß es im späteren Betrieb des Lagers (1) eine axiale Kraft auf einen Teil des Lagers (1) ausübt.

10. Lageranordnung nach Anspruch 9, **dadurch gekennzeichnet, daß** das Lager (1) durch plastische Verformung, vorzugsweise durch Verstemmen, eines Teilbereichs (4) des Lagerschildes (2) in axialer Richtung formschlüssig mit dem Lagerschild (2) verbunden ist.

11. Lageranordnung nach Anspruch 9 oder 10, **dadurch gekennzeichnet, daß** das Halteblech (6) mit dem Lagerschild (2) verschweißt, insbesondere laserverschweißt oder elektronenstrahlverschweißt, ist.

12. Lageranordnung nach Anspruch 9 oder 10, **dadurch gekennzeichnet, daß** das Halteblech (6) mit dem Lagerschild (2) verlötet oder verklebt ist.

13. Lageranordnung nach einem der Ansprüche 9 bis 12, **dadurch gekennzeichnet, daß** das Halteblech (6) so geformt ist, daß es mit seiner Unterseite (7) auf einen Teil des Seitenbereichs (8) des Außenringes (9) des Lagers (1) drückt.

## Claims

1. A method of fastening at least one bearing (1) in a bearing plate (2) which has a recess (3) to accommodate the bearing (1), wherein the bearing (1) to be located is positioned in the recess (3) of the bearing plate (2),
**characterised in that**
the method has the steps of:
a) stamping at least one locating face (5) on the bearing plate (2) for the locating of a retaining plate (6);
b) locating a retaining plate (6) by applying the retaining plate (6) against the at least one stamped locating face (5), wherein the retaining plate (6) is located so that during the subsequent operation of the bearing (1) it exerts an axial force on a part of the bearing (1);
c) connecting the retaining plate (6) to the bearing plate (2) by cohesive force.

2. A method according to Claim 1, **characterised in that**, before carrying out the method steps b) and c) according to Claim 1, the bearing (1) is axially located relative to the bearing plate (2) by plastic deformation, preferably by staking, of a portion (4) of the bearing plate (2).

3. A method according to Claim 1 or 2, **characterised in that** the cohesive connection according to step c) according to Claim 1 is effected by welding.

4. A method according to Claim 3, **characterised in that** the welding process is a laser welding process.

5. A method according to Claim 3, **characterised in that** the welding process is an electron-beam welding process.

6. A method according to Claim 1 or 2, **characterised in that** the cohesive connection according to step c) according to Claim 1 is established indirectly via an additional material'incorporated into a gap between the bearing plate (2) and the retaining plate (6).

7. A method according to Claim 6, **characterised in that** the cohesive connection is established by soldering or bonding.

8. A method according to any one of Claim 1 to 7, **characterised in that** the locating of the retaining plate (6) for the purpose of exerting an axial force on to a part of the bearing (1) during the subsequent operation of the bearing (1) is effected in such a way that the retaining plate (6) is acted upon with a predetermined force (F) during the fastening of the retaining plate (6) to the bearing plate (2) in the axial direction (14) of the bearing (1).

9. A bearing assembly comprising a bearing plate (2) having at least one recess (3) in which a bearing (1) is disposed,
**characterised in that**
the bearing plate (2) has at least one stamped locating face (5) for the accurate location of a retaining plate (6) and also a retaining plate applied to the locating face (5), wherein the retaining plate (6) is connected to the bearing plate (2) by cohesive force and wherein the retaining plate (6) is located so that during the subsequent operation of the bearing (1) an axial force is exerted on a part of the bearing (1).

10. A bearing assembly according to Claim 9, **characterised in that** the bearing (1) is connected by plastic deformation, preferably by staking, of a portion (4) of the bearing plate (2) in an axial direction in a form-locking manner to the bearing plate (2).

11. A bearing assembly according to Claim 9 or 10, **characterised in that** the retaining plate (6) is welded to the bearing plate (2), in particular laser welded or electron-beam welded.

12. A bearing assembly according to Claim 9 or 10, **characterised in that** the retaining plate (6) is soldered or bonded to the bearing plate (2).

13. A bearing assembly according to any one of Claims 9 to 12, **characterised in that** the retaining plate (6) is formed so that with its underside (7) is presses on to a part of the lateral region (8) of the outer ring (9) of the bearing (1).

## Revendications

1. Procédé de fixation d'un palier (1), au nombre d'au moins un, dans une flasque-bouclier (2) présentant une dépression (3) pour recevoir le palier (1), selon lequel le palier (1) à fixer est positionné dans la dépression (3) de la flasque-bouclier (2),
**caractérisé en ce que**
le procédé comprend les étapes suivantes:
a) réalisation par estampage d'au moins une surface de positionnement (5) sur la flasque-bouclier (2), en vue du positionnement d'une tôle de maintien (6);
b) positionnement d'une tôle de maintien (6) par application de ladite tôle de maintien (6) contre la surface de positionnement (5) estampée, au nombre d'au moins une, la tôle de maintien (6) étant positionnée de manière telle que, lors du fonctionnement ultérieur du palier (1), elle exerce une force axiale sur une partie du palier (1);
c) liaison par matière de la tôle de maintien (6) à la flasque-bouclier (2).

2. Procédé selon la revendication 1, **caractérisé en ce que**, avant l'exécution des étapes b) et c) selon la revendication 1, le palier (1) est immobilisé axialement par rapport à la flasque-bouclier (2), par déformation plastique, de préférence par matage, d'une zone partielle (4) de la flasque-bouclier (2).

3. Procédé selon la revendication 1 ou 2, **caractérisé en ce que** la liaison par matière selon l'étape c) de la revendication 1 est réalisée par soudage.

4. Procédé selon la revendication 3, **caractérisé en ce que** le procédé de soudage est de type soudage au laser.

5. Procédé selon la revendication 3, **caractérisé en ce que** le procédé de soudage est de type soudage par faisceau d'électrons.

6. Procédé selon la revendication 1 ou 2, **caractérisé en ce que** la liaison par matière selon l'étape c) de la revendication 1 est réalisée de manière indirecte à l'aide d'un matériau supplémentaire introduit dans un espace entre la flasque-bouclier (2) et la tôle de maintien (6).

7. Procédé selon la revendication 6, **caractérisé en ce que** la liaison par matière est réalisée par brasage ou collage.

8. Procédé selon une des revendications 1 à 7, **caractérisé en ce que** le positionnement de la tôle de maintien (6), en vue de l'exercice d'une force axiale sur une partie du palier (1) lors du fonctionnement ultérieur du palier (1), est réalisé de manière telle que, pendant la fixation de la tôle de maintien (6) à la flasque-bouclier (2), ladite tôle de maintien (6) soit soumise à une force (F) prédéterminée dans la direction axiale.

9. Agencement de palier constitué d'une flasque-bouclier (2) comportant au moins une dépression (3) dans laquelle est disposé un palier (1),
**caractérisé en ce que**
la flasque-bouclier (2) présente au moins une surface de positionnement (5) réalisée par estampage, en vue du positionnement précis d'une tôle de maintien (6), ainsi qu'une tôle de maintien appliquée contre la surface de positionnement (5), la tôle de maintien (6) étant liée par matière à la flasque-bouclier (2) et étant positionnée de manière à exercer une force axiale sur une partie du palier (1) lors du fonctionnement ultérieur du palier (1).

10. Agencement de palier selon la revendication 9, **caractérisé en ce que** le palier (1) est lié par complémentarité de formes, dans la direction axiale, à la flasque-bouclier (2), par déformation plastique, de préférence par matage, d'une zone partielle (4) de la flasque-bouclier (2).

11. Agencement de palier selon la revendication 9 ou 10, **caractérisé en ce que** la tôle de maintien (6) est liée par soudage à la flasque-bouclier (2), notamment par soudage au laser ou par soudage par faisceau d'électrons.

12. Agencement de palier selon la revendication 9 ou 10, **caractérisé en ce que** la tôle de maintien (6) est liée par brasage ou collage à la flasque-bouclier (2).

13. Agencement de palier selon une des revendications 9 à 12, **caractérisé en ce que** la tôle de maintien (6) est formée de manière telle qu'elle appuie avec sa face inférieure (7) sur une partie de la zone latérale (8) de la bague extérieure (9) du palier (1).
